# EUROPÄISCHE PATENTANMELDUNG

(11) **EP 0 979 608 A2**
(43) Veröffentlichungstag der Anmeldung: **16.02.2000**
(21) Anmeldenummer: 99114873.5
(22) Anmeldetag: 29.07.1999
(51) Int. Cl.: A21D 8/04

(54) **Verfahren zur Verwertung von Backwaren, insbesondere von Rest-, Rückbrot und/oder Altbackwaren**

(30) Priorität: 04.08.1998 DE 19835269
(71) Anmelder: Müller-Brot GmbH, 85375 Neufahrn (DE)
(72) Erfinder: Felch, Hans-Uwe, 86609 Donauwörth (DE)
(74) Vertreter: Kern, Ralf M., Dipl.-Ing.

(57) **Zusammenfassung**

Die Erfindung beruht in einem Verfahren zur Verwertung von nicht verwendeten Backwaren, insbesondere von Rest-, Rückbrot und /oder Altbackwaren, bei dem das Ausgangsmaterial nach einer Aussortierung von Fremdstoffen enzymatisch und/oder säurehydrolytisch ggfs. bei gleichzeitiger Klärung, hydrolysiert wird, aus dem Hydrolysat der flüssige siruphaltige Anteil nach einer ersten Trennstufe, ggfs. mit Frischwasserzugabe unter aerobischen Bedingungen, und/oder unter Zugabe von Steilhefe, zu Hefe umgesetzt wird und danach in einer zweiten Trennstufe die gewonnene flüssige Hefe zur Weiterverarbeitung abgezogen wird, der gesamte in der ersten Trennstufe vom Sirupanteil abgetrennte Hydrolysat-Anteil als Ganzes unter Beimischung von Roggenmahlerzeugnissen ggfs. Wasser mit Sauerteig-Starterkulturen und/oder Verfahrensflüssigkeit zu Sauerteig umgesetzt wird, vorzugsweise mittels Milchsäurebakterien.

## Beschreibung

Bekannt ist die Verwendung von Rest-, Rück- und/oder Altbackwaren zur Herstellung von Zuckersirup durch enzymatische Hydrolyse als Kulturmedium für die Hefeherstellung (DE PS 36 23 896). Vorgenanntes Verfahren jedoch nutzt die nicht zur Herstellung von Hefe notwendigen Bestandteile des Ausgangssubstrates als Rohstoff zur Sauerteigbereitung; die Rohstoffe, die naturgemäß von ihrer Zusammensetzung her dem Rohstoff Restbrot nahekommen und ebensogut - wenn nicht besser - geeignet sind.

Bekannt ist ferner eine Weiterverwendung des bei der Abtrennung des Sirups (Dekantierung u. a.) übrigbleibenden Anteils des Hydrolysats, indem dieses durch Milchsäurebakterien in die Einzelbestandteile Backhefe, Flüssigsauer, Ballaststoffe, Ethanol und Kohlendioxyd zerlegt und jeweils getrennt weiterverwertet werden (DE 196 31 180). Dafür ist jedoch ein kostenträchtiger Aufwand notwendig.

Damit wird zwar ein Verfahren beschrieben, das eine vollständige Verwertung von Rest- und Rückbrot in einer Kreislaufwirtschaft beschreibt. Dieses Verfahren führt von einem mit Milchsäurebakterien angesäuerten Intermediärprodukt in einem aeroben und anaeroben Verfahren zur Gewinnung von Bäckereihefe in verfahrenstechnisch anspruchsvoller und kostenaufwendiger Weise. Dabei wird auch der Stand der Technik bei der Hefeproduktion und Qualitätssicherung der Hefereinkulturen bzw. Steilhefen wird außer Acht gelassen.

In diesem Verfahren soll außer der Produktion von Bäckereihefe die Wirtschaftlichkeit dadurch erreicht werden, daß noch Kohlenmonoxyd, Ethanol, Ballaststoffe und Flüssigsauer gewonnen wird. Die Produktion von Flüssigsauer ist jedoch in diesem Verfahren als biochemisches Nebenprodukt zu erkennen und damit ein Säuerungsmittel im Sinne einschlägiger rechtlicher Bestimmungen, aber kein Sauerteig, wie er im nachstehend beschriebenen erfindungsgemäßen Verfahren hergestellt wird.

Erfindungsgemäß hat sich überraschenderweise herausgestellt, daß die vom Sirup abgetrennten Bestandteile ohne Abtrennung voneinander als Ganzes ohne geschmacklichen Nachteil rückstandslos als Ausgangsmaterial für die Sauerteigproduktion verwendbar sind.

Demnach liegt die Erfindung in erster Linie in einem Verfahren zur Verwertung von nicht verwendeten Backwaren, insbesondere von Rest-, Rückbrot und/oder Altbackwaren, bei dem das Ausgangsmaterial nach einer Aussortierung von Fremdstoffen enzymatisch und/oder säurehydrolytisch, ggfs. bei gleichzeitiger Klärung, hydrolysiert wird, aus dem Hydrolysat der flüssige siruphaltige Anteil nach einer ersten Trennstufe ggfs. mit Frischwasserzugabe unter aerobischen Bedingungen und/oder unter Zugabe von Stellhefe zu Hefe umgesetzt und danach in einer zweiten Trennstufe die gewonnene flüssige Hefe zur Weiterverarbeitung abgezogen wird, der gesamte in der ersten Trennstufe vom Sirupanteil abgetrennte Hydrolysat-Anteil als Ganzes unter Beimischung von Roggenmahlerzeugnissen und ggfs. Wasser mit Sauerteig-Starterkulturen zu Sauerteig umgesetzt wird, vorzugsweise mittels Milchsäurebakterien.

Von einer zweiten anschließenden Trennstufe können die von der Hefe abgetrennten Verfahrens-Anteile der Umsetzung zu Sauerteig zugeführt werden.

Somit umfaßt die Erfindung also die Verfahrensschritte: Enzymatische Verflüssigung, enzymatische Verzuckerung oder Hydrolyse durch Säurekomponenten, Raffination, Auftrennung in eine Fraktion, die der Hefeproduktion dient und eine Fraktion, die vollständig der Herstellung von Sauerteig dient.

Die damit erzielten aufwandmäßigen Einsparungen werden noch durch eine steuerungsmäßige Möglichkeit verstärkt, bei dem das Verfahren an den - je nach Bedarf schwankenden Hefeanteil - dadurch gesteuert anpassbar ist, indem der im Sauerteig-Verfahrensbereich umgesetzte Substratanteil vergrößert oder verkleinert wird.

Demnach können bei dem erfindungsgemäßen Verfahren die normalerweise im Verhältnis von 0,75 : 1,25 und ggfs. : 2,0 stehenden Hydrolysatanteile, Roggenmehlerzeugnisse und Flüssigkeitskomponenten bis zu einem Hydrolysatanteil von 0,25 vermindert werden.

Auch können ggfs. keinerlei oder weniger Teigsäuerungsmittel eingesetzt werden. Zudem wird eine umweltbelastende Ableitung von Abwasser und Feststoffkomponenten des Ausgangssubstrats vermieden und ist ein im Gleichgewicht befindlicher Flüssigkeits-kreislauf weitgehend einstellbar.

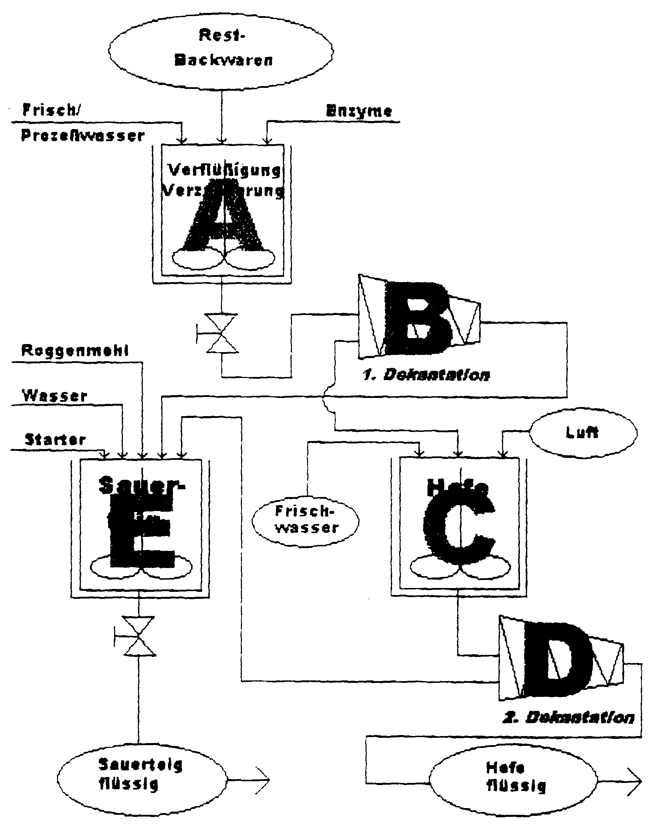

Bei der in der Figur dargestellten schematischen Übersicht des erfindungsgemäßen Verfahrens wird in der Eingangsstufe A das Ausgangsmaterial mittels Enzymen, ggfs. unter Hinzufügung von Schönungsmitteln, enzymatisch hydrolysiert, d. h. unter Umrühren verflüssigt und verzuckert und notfalls geklärt. Dabei wird 1 Teil Ausgangsmaterial mit 0,5 - 4,0 Teilen Wasser verarbeitet. Für diese enzymatische Hydrolyse haben sich folgende Verfahrensbedingungen im Verfahrensbehälter bewährt:
- Temperatur:: ca. 60 ° C
- Reaktionszeit:: 24 - 48 Std. - je nach Konzentration der Enzyme
- PH-Wert:: 5,0 - 6,0
- Enzymart:: α-Amylasen - Glucoamylasen

In der ersten Trennstufe B erfolgt durch Dekantation eine Abtrennung des Sirupanteils vom Hydrolysat, wobei aus dem Sirup in der Verfahrensstufe C unter kontrollierter Zugabe von Stellhefe und Frischwasser unter Luft und aerobischer Bedingung Hefe hergestellt wird, und zwar unter Umwandlung des Zuckers aus dem Sirup zu Hefe.

Dabei wird unter den für die Herstellung von Bäckereihefe üblichen Standardbedingungen bei einer Vermehrungszeit von ca. 12 Stunden ein Proteingehalt über 40 % (i. HTS) und eine Ausbeute von 50 % des eingesetzten Zuckers gemessen als Hefetrockensubstanz erzielt.

In der Verfahrensstufe D schließlich wird mittels Dekantation die erzeugte Hefe abgetrennt (2. Trennstufe) und mit etwa 2 - 4 Teilen Flüssigkeit dem Produktionsprozeß des Backbetriebes wieder zugeführt, und zwar in einer derart guten Qualität, daß sie bei Bedarf auch im Verhältnis 1:1 mit üblicher Industriehefe bei Bedarf austauschbar ist.

Die gesamte in der ersten Trennstufe (Verfahrensschritt B) anfallende Restfraktion des Hydrolysats wird in der Verfahrensstufe E der Sauerteig-Herstellung zugeleitet. Dort mit Sauerteig-Starter sowie Roggenmahlerzeugnissen und einem Flüssigkeitsanteil vermengt, der zum Teil aus der Dekantations-Verfahrensstufe D stammt. Unter bekannter Verfahrenstechnik, ggfs. unter Rühren, ggfs. unter kontrollierter Atmosphäre wird daraus dann Sauerteig bereitet.

Normalerweise beträgt das Verhältnis der eingesetzten Hydrolysat-Masse zu den eingesetzten Roggenmahlerzeugnissen 0,75 : 1,25, zu dem noch - jedoch in weiten Grenzen - variabel ca. 2,0 Teile an Flüssigkeit hinzukommt, wobei auch die Zufuhr von Flüssigkeit aus der Hefedekantation bewährt ist. Der gewonnene Sauerteig wird nach der Reifezeit direkt dem Produktionsprozeß des Backbetriebes zugeleitet.
- Temperatur des Substrates zum Beginn:: 25 - 28 □° C
- Reaktionszeit (Reifezeit) :: ca. 40 Std.
- Säuregrad (nach Standardmethode):: ca. 24 -30 Säuregrade
- Anwendungsbeispiel 1:: 0,5 - 0,2 Anteile Sauerteig, bezogen auf die in den Backwaren verarbeitenden Roggenmahlerzeugnisse.

Obwohl der Ausnutzungsgrad bei aerober Hefeherstellung geringer ist als bei der kombinierten anaeroben/aeroben Verhefung ist das erfindungsgemäße Verfahren durch die weitgehend vollständige Verwertung des Hydrolysatrückstands und durch die Varationsbreite der Rückbrotverwertung sowie die insgesamte Vereinfachung des Verfahrens, deutlich günstiger als herkömmliche Verfahren, also trotz Verzichts auf einen hohen Ausnutzungsgrad bei der Hefeherstellung.

Wegen der besonderen Wirtschaftlichkeit des erfindungsgemäßen Verfahrens ist es auch für die Herstellung besonderer Hefen mit hohem Proteingehalt für die menschliche Ernährung und als Tierfutter prädestiniert (Torula utilus).

Dabei kann das Abtrennen des Hefesubstrats durch unterschiedliche Verfahrensweisen erfolgen, statt durch Dekantation auch durch Filtrieren, Zentrifugieren oder auch Umkehrosmose.

Dem Abtrennen des Hefenährsubstrats kann auch eine Zwischenstufe vorgeschaltet werden, in der das Hydrolysat zur Einstellung eines Partikelgrößenspektrums homogenisiert wird.

Das entsprechende Impfgut (bzw. Stellhefe) wird in einem Fermenter kontinuierlich - bei anderer Verfahrenstechnik auch diskontinuierlich - zugeführt. Die Einstellung der verfahrenstechnischen Parameter für die Hefeproduktion sind vorzugsweise Temperatur, Zeit, ph-Wert, Druck, Sauerstoffgehalt in der Lösung, Sterilluft - aber auch Nähr und Wachstumsstoffe für die Hefe, wie z. B. Vitamine, Aminosäuren oder andere Stickstoffquellen.

## Patentansprüche

1. Verfahren zur Verwertung von nicht verwendeten Backwaren, insbesondere von Rest-, Rückbrot und /oder Altbackwaren, bei dem das Ausgangsmaterial nach einer Aussortierung von Fremdstoffen enzymatisch und/oder säurehydrolytisch ggfs. bei gleichzeitiger Klärung, hydrolysiert wird, aus dem Hydrolysat der flüssige siruphaltige Anteil nach einer ersten Trennstufe, ggfs. mit Frischwasserzugabe unter aerobischen Bedingungen, und/oder unter Zugabe von Stellhefe, zu Hefe umgesetzt wird und danach in einer zweiten Trennstufe die gewonnene flüssige Hefe zur Weiterverarbeitung abgezogen wird, der gesamte in der ersten Trennstufe vom Sirupanteil abgetrennte Hydrolysat-Anteil als Ganzes unter Beimischung von Roggenmahlerzeugnissen ggfs. Wasser mit Sauerteig-Starterkulturen und/oder Verfahrensflüssigkeit zu Sauerteig umgesetzt wird, vorzugsweise mittels Milchsäurebakterien.

2. Verfahren nach Anspruch 1, dadurch gekennzeichnet, daß auch die bei der zweiten Trennstufe von der Hefe abgeschiedenen Anteile der Umsetzung zu Sauerteig beigefügt werden.

3. Verfahren nach einen der Ansprüche 1 oder 2, bei dem die normalerweise im Verhältnis von 0,75 : 1,25 und gegebenenfalls : 2,0 stehenden Hydrolysatanteile, Roggenmahlerzeugnisse und Flüssigkeitskomponenten bis zu einem Hydrolysatanteil von 0,25 vermindert werden.

4. Sauerteig, dadurch gekennzeichnet, daß er mindestens teilweise einen bei der Hefeproduktion insbesondere aus Rest-, Rückbrot und/oder Altbackwaren von der Sirup- und/oder Hefefraktion von der Hefegewinnung abgetrennten Anteil aufweist.
